# EUROPEAN PATENT SPECIFICATION

(11) **EP 0 660 148 B1**
(45) Date of publication and mention of the grant of the patent: **24.03.1999**
(21) Application number: 94308579.5
(22) Date of filing: 21.11.1994
(51) Int. Cl.: G02B 6/44

(54) **Process for manufacturing optical fiber ribbons**
Verfahren zur Herstellung eines faseroptischen Bandes
Procédé de fabrication d'un ruban à fibres optiques

(30) Priority: 21.12.1993 US 171023
(43) Date of publication of application: 28.06.1995
(73) Proprietor: PIRELLI CABLE CORPORATION, Lexington, South Carolina 29072 (US)
(72) Inventor: Rahman, Mujibar M., Columbia, SC 29223 (US); Tondi-Resta, Jose' Luis, Columbia, SC 29223 (US); Fitz, Jonathan G., West Columbia, SC 29170 (US); Wells, Ben H., Irmo, SC 29063 (US)
(74) Representative: Abbie, Andrew Kenneth

(56) References cited:
- EP-A- 0 253 457
- EP-A- 0 357 139
- EP-A- 0 407 004
- WO-A-92/18892
- FR-A- 2 393 503
- PATENT ABSTRACTS OF JAPAN vol. 17, no. 685 (C-1142) 15 December 1993 & JP-A-05 229 855 (USHIO) 7 September 1993
- PATENT ABSTRACTS OF JAPAN vol. 14, no. 128 (P-1019) 9 March 1990 & JP-A-01 319 714 (SUMITOMO) 26 December 1989

## Description

The present invention relates to an improved apparatus and process for manufacturing optical fiber ribbons.

Because of their high bandwidth capacity and small physical size, optical fibers are now used in a wide variety of applications. However, optical fibers are fragile, and are also susceptible to stress and bending, which cause optical attenuation. Consequently, adequate mechanical protection of the fibers is necessary.

One way to protect optical fibers is to arrange and package them into a planar array of individual fibers covered by a curable coating material, forming a ribbon-like structure. This ribbon structure not only provides for the mechanical protection of the individual optical fibers, but through orderly alignment provides stability, and also makes splicing easier. See, for example, U.S. Patent No. 4,900,125.

Currently, optical fiber ribbons are of two types: thin or thick. Thick ribbons, i.e. having a coating thickness of about 10 microns, are used primarily in situations requiring a robust structure capable of handling mechanical abuse without losing structural integrity or optical performance. However, planar arrays of optical fibers covered by a thick coating of curable material suffer warpage problems, are thicker than necessary if the sole purpose of the coating is to provide protection for the fiber, decrease the packing efficiency, i.e. the number of fibers which can be accommodated in a given volume, and create undesirable stresses due to thermal expansion. Therefore, it is desirable to keep the coating thickness to a minimum.

Thin ribbons have a much thinner coating of curable material, e.g. about 25 microns or less, covering the optical fiber array than the thick variety, requiring less coating material and therefore having greater packing efficiency. However, if the films are too thin, they will tend to form depressions or menisci between the fiber interstices during curing, resulting in a nonplanar ribbon surface. Further, variations in fiber size or alignment within the array also cause the outer surface of the ribbon to become nonplanar, forming edges or "ribs" which may interlock with other ribbons.

A further difficulty in using thin film ribbons is the need for a high interfiber bonding strength. Thin films unlike the thick variety may not provide sufficient support for the ribbon structure, thereby requiring stronger interfiber adhesive materials. However, increased interfiber bonding strength affects the mobility of the individual fibers and their optical performance within cables. Also, if it becomes necessary to separate the individual fibers for splicing, the bonding material must be removed, and the strong adhesives may remove identifying ink markings or colors on the individual fibers as well, rendering the individual fibers unidentifiable and seriously complicating the splicing operation. Despite these drawbacks, it is nonetheless desirable to keep the coating thickness to a minimum.

In reality, a thin or thick ribbon has a certain minimum thickness "wrapping around" the fibers rather than simply filling the interstices between them. This extra support simultaneously creates a smooth planar ribbon surface as well as holds the fibers together without requiring an unusually high interfiber bonding force. The more planar the array of individual fibers, the thinner the coating layer necessary to achieve this stability.

However, even with perfect fiber alignment and coating uniformity, non-uniform curing of the coating material will seriously compromise the planarity of the ribbon. Conventional UV curing ovens do precisely that. Due to the optical conditions within the oven, one of the two faces of the ribbon is cured more quickly than the other, initial planarity is lost and the ribbon warps. Multiple ovens may be configured so that their sum total radiation is equal on both faces of the ribbon. However, this will not correct the warpage problem since the radiation within the individual ovens will still be unbalanced.

Despite various technical advances in this art for minimizing the planar coating thicknesses of fiber optic ribbons, conventional curing ovens through imbalanced or uneven curing prevent capitalization on advances for obtaining planarity of the fibers. These advances, however, came to full fruition in the present invention which overcomes the problems associated with uneven curing of fiber ribbons during manufacture.

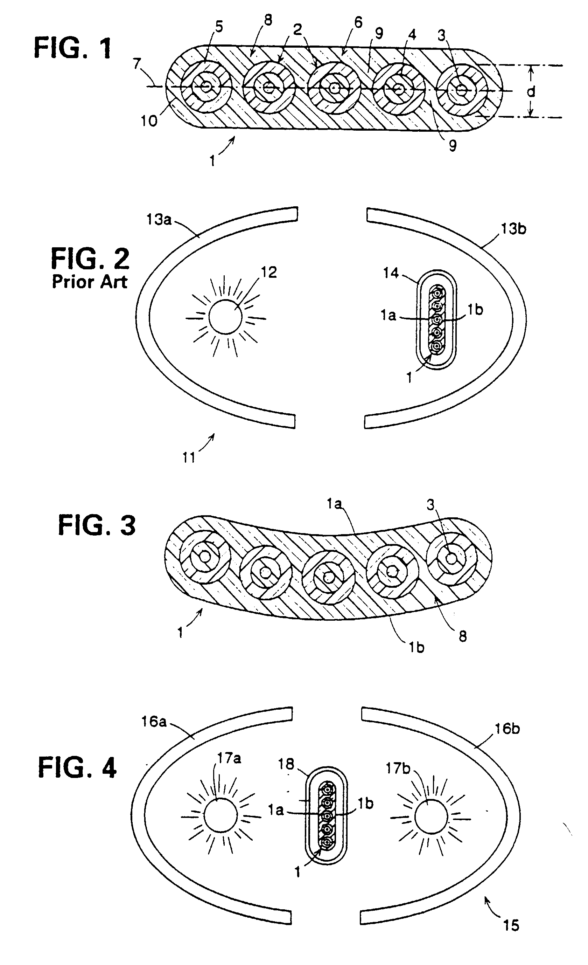

WO-A-92/18892 discloses a method wherein synthetic material is applied to an optical fiber ribbon and cured. In one embodiment (see Figure 10) focussing lenses direct UV radiation to opposite faces of the ribbon. Radiation is transmitted to the lenses through light conductors using a parabolic (non-focussing) reflector (see Figure 3).

An object of the invention is to overcome at least some of the above mentioned disadvantages.

Accordingly, the invention provides a process of manufacturing an optical fiber ribbon containing a plurality of longitudinally extending optical fibers and having differently facing major surfaces without curvature transversely to the ribbon length, comprising the following steps:
(a) aligning said longitudinally extending optical fibers into a substantially planar array of parallel and adjacent optical fibers with the longitudinal axes of the fibers in a rectilinear plane;
(b) extruding a layer of radiation curable coating materials on said planar optical fiber array to provide a coated planar array of parallel optical fibers with differently facing first and second coated major surfaces, said array having a thickness dimension between said major surfaces less than the width dimension of the array in the direction transverse to said thickness dimension; and
(c) passing the coated planar array between a pair of spaced curing radiation sources disposed directly opposite one another at opposite sides of the array passing therebetween each of said sources including a respective curing radiation emitter and a respective radiation focussing reflector, each emitter being between the reflector associated therewith and the coated planar array, both of said sources being arranged for directing curing radiation towards each other and uniformly and simultaneously focussing curing radiation onto respective directly opposite axially extending surface portions of said first surface and said second surface therebetween such that curing radiation uniformly and simultaneously impinges on said surface portions.

The invention also includes an apparatus for manufacturing an optical fiber ribbon having a plurality of longitudinally extending optical fibers therein, comprising:
means for aligning said longitudinally extending optical fibers into a substantially planar array of parallel and adjacent optical fibers as they are advanced in the direction of their lengths;
means for extruding a radiation curable coating material layer on said planar optical fiber array as said optical fibers are advanced to provide a ribbon having a width transverse to the direction of advance greater than the thickness of the ribbon transverse to the width of the ribbon and providing first and second differently facing major surfaces on said layer;
oven means for curing said radiation curable coating material layer on said planar array with curing radiation as said array is advanced, said oven means comprising:
a first lamp adjacent said first surface of said layer for emitting radiation which will cure said layer, and a second lamp adjacent said second surface of said layer but at the opposite side of said layer from said first lamp for emitting curing radiation; and
a first reflector directing said curing radiation from said first lamp toward said second lamp and focussing said curing radiation onto said first surface of said planar array and a second reflector directing said curing radiation from said second lamp toward said first lamp and focussing said curing radiation onto said second surface of said planar array;
whereby said Oven means uniformly and simultaneously cures said radiation curable coating material layer on said planar array.

The invention also includes a process of manufacturing an optical fiber ribbon including providing an elongate assembly comprising a radiation curable coating On a planar array of optical fibers, and curing said coating by directing curing radiation onto each of two directly opposite axially extending outer major surface portions of said coated array, wherein said curing is effected using directly oppositely disposed radiation means each comprising a radiation focussing reflector and a curing radiation emitter disposed between its respective reflector and said assembly, said radiation means being arranged such that substantially the same amount of radiation is directly and simultaneously focussed onto each of said outer surface portions of said array.

The invention also includes apparatus for curing a radiation curable coating of an elongate assembly comprising said coating on a planar array of optical fibers, said apparatus comprising directly oppositely disposed first and second radiation means, each of which comprises a radiation focussing reflector and a radiation emitter, and means for positioning the coated array between said radiation means such that, in use, said radiation means simultaneously focus substantially the same amount of radiation onto each of two directly opposite axially extending outer surface portions of said radiation curable coating.

Preferred embodiments are defined in the subclaims.

Other objects and advantages of the present invention will be apparent from the following detailed description of the presently preferred exemplary embodiments thereof, which description should be considered in conjunction with the accompanying drawings in which:
Fig. 1 is an end cross-sectional view of an optical fiber ribbon;
Fig. 2 is a schematic diagram of a conventional elliptical oven for curing an optical fiber ribbon;
Fig. 3 is an end cross-sectional view of a warped optical fiber ribbon;
Fig. 4 is a schematic diagram of an oven configuration employing dual opposed lamps with elliptical reflectors for curing an optical fiber ribbon;
Fig. 5 is a schematic perspective view of the oven configuration shown in Fig. 4;
Figs. 6 and 7 are fragmentary, cross-sectional views of portions of reflectors having a dichroic layer for reflecting ultraviolet radiation and absorbing or transmitting longer wavelengths;
Fig. 8 is a schematic view of a manufacturing process; and
Fig. 9 is an end cross-sectional view of an optical fiber ribbon with two plastic coating layers.

Referring now to Fig. 1, there is shown a cross-sectional view of an optical fiber ribbon produced in accordance with the process described herein with reference to Figs 4 to 9, which is designated generally by the numeral 1. The ribbon comprises a plurality of longitudinally extending individual optical fibers 2, each comprising a core 3 and a cladding 4, and each preferably having a layer 5 of a conventional protective coating material, e.g. a plastic, thereon. The plurality of longitudinally extending fibers 2, each preferably having the same or similar diameters d, are arranged in a planar array 6, the center of each fiber being aligned along an axis 7 transverse to the longitudinal direction of the optical fibers, and the entire array being covered with a cured layer 8 of adhesive matrix coating material, e.g. UV curable acrylate, not only filling the interstices 9 between adjacent optical fibers 2 but also covering the fibers 2, including the portions 10 of the end fibers in the array 6.

Conventional ovens, by rapidly heating the ribbon fibers and matrix materials during processing and failing to uniformly cure the curable coating materials, warp even perfectly aligned planar arrays 6, whereas the process described herein with reference to Figs 4 to 9 eliminates or reduces these warpage problems, allowing smoother and thinner planar coatings for both thin and thick ribbons. Prior to describing this process however, the particular equipment employed in the process will be discussed.

For the purpose of curing coating materials on optical fiber ribbons, curing ovens are typically used to irradiate and cure, i.e. harden, the curable coating materials, forming a hardened ribbon structure having strength and stability. The structure of a conventional elliptical curing oven is illustrated schematically in Fig. 2 where the numeral 11 designates generally an elliptical curing oven having a single elongated lamp 12 located at one focal axis of an elliptical reflector 13a surface. Lamp 12 preferably radiates energy at a wavelength which will cause the coating material layer 8 to cure, e.g. ultraviolet ("UV") and may, for example, be a medium pressure mercury vapor lamp powered by microwaves and of the type sold by Fusion Systems Corporation, Rockville, Md. The elliptical reflector 13a focuses most of the radiant energy from the lamp 12 on the ribbon 1 within a quartz tube 14 located at the focal point of a second elliptical reflector 13b, and also directs radiant energy onto the surface of reflector 13b. The radiant energy is emitted along the axial length of the lamp 12 and reflected onto the ribbon 1 by both of the elliptical reflectors 13a and 13b, preferably distributing the radiant energy uniformly along the axial length of the tube 14. The ribbon 1 with the uncured plastic material layer 8 thereon is passed longitudinally within the bore of the quartz tube 14 where it is subjected to the radiant energy reflected by the reflectors 13a and 13b and received directly from the lamp 12 causing the material of the layer 8 to commence to cure.

The optical efficiency (energy received and reflected by the reflectors vs. total energy emitted by the radiation source) of the conventional oven configuration shown in Fig. 2 is approximately 75%, i.e. only 75% of the emitted radiation actually contacts the uncured coating material layer 8 on ribbon 1 within quartz tube 14. However, the radiation striking the faces of flat ribbon 1 is not uniform. Instead, the amount of radiation energy received by the face 1a nearer the lamp 12, directly and indirectly from lamp 12, is approximately 70% of the radiation striking the entire ribbon 1. The remaining 30% strikes the opposite ribbon face 1b indirectly, i.e. reflected off of reflector 13b. Therefore the faces 1a and 1b of ribbon 1 receive different amounts of curing radiation, both faces cure at different rates and thus contract at different rates. This 70/30 curing differential causes greater contraction along the ribbon face having higher UV exposure, face 1a, resulting in warpage of the ribbon 1, as shown in Fig. 3.

One attempt to provide uniform irradiation of ribbon 1 is to use a pair of conventional ovens of the type shown in Fig. 2 in series with each other, i.e. displaced with respect to each other in the direction of advance of the ribbon, but with the oven components interchanged. Face 1a, while passing through a first oven, receives 70% of the curing radiation and face 1b 30%, but upon entry to a second and reversed oven, the face 1b is nearer the lamp 12 and these percentages are reversed. However, prior to reaching the second oven, uneven curing and the subsequent uneven contraction has already begun, which results in a warped ribbon.

Warpage damage due to curing variations is especially problematic in the case of Original Equipment Manufacturers ("OEM") reflectors which, not being designed specifically for optical fiber ribbon production, may vary greatly in reflective and focal properties, resulting in commensurate variance in radiation dosages striking the faces of ribbon 1.

It will be apparent that if the ribbons are warped during curing not only is the possible packing efficiency in a cable reduced but also the interlocking problems of stacked ribbons are increased.

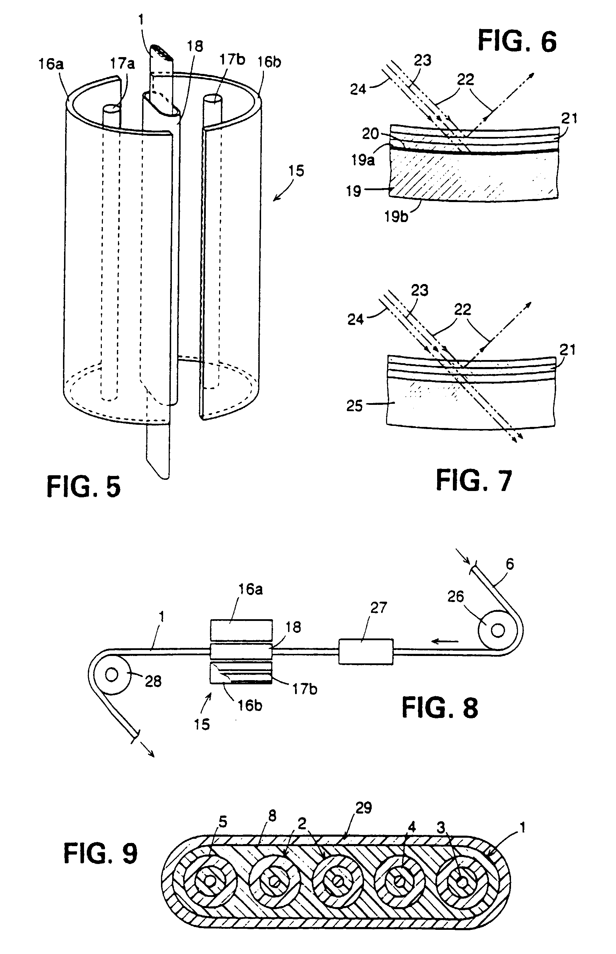

The oven configuration utilized in the process described herein with reference to Figs 4 to 9 to overcome the warpage problems caused by non-uniform irradiation, employs a curing oven having a configuration different from that of the conventional ovens discussed heretofore. Shown schematically in Fig. 4 and in schematic perspective in Fig. 5 is an oven 15 having radiation means comprising a pair of elliptical reflectors 16a and 16b, as before, but each being directly oppositely disposed and having a radiation emitting lamp 17a and 17b, respectively, along a focal axis thereof between itself and the array. Both reflectors 16a and 16b direct the radiation toward each other and uniformly and simultaneously focus the radiant energy from lamps 17a and 17b, respectively, onto directly opposite axially extending outer surface portions of the ribbon 1 in a quartz tube 18, which may be the sane as the quartz tube 14, through which the ribbon 1, having layer 8 of a curable coating material thereon is passed. Although the quartz tube is shown with a corresponding shape to that of the ribbon, it may be circular. Instead of the conventional serial applications of uneven radiation to achieve uniform radiation application, the oven configuration described herein with reference to Figs 4 to 9 provides a one-pass simultaneous and uniform curing treatment at both faces, 1a and 1b, of the fiber ribbon 1 positioned between the radiation means 16a, 17a and 16b, 17b, avoiding the uneven contraction and warpage damage to fiber optics ribbons caused by conventional oven systems.

Although the reflectors used in conventional ovens can be used in the oven described in the last preceding paragraph, a problem with the use of such reflectors is that not only the desired energy wavelengths, e.g. short wavelengths of UV radiation, are reflected and directed by the reflectors 16a and 16b upon the ribbon 1. Instead, conventional reflectors reflect the entire spectrum of radiant energy emitted by the lamps, which includes not only the desired UV radiation but undesired longer wavelength visible light and Infrared ("IR") radiation as well. Since the principal effect of IR radiation is heat, reflected IR heat energy focused upon the faces of ribbon 1 can heat the surfaces of faces 1a and 1b instantaneously to high temperatures which do not reduce quickly, thereby often causing warpage and/or thermal damage to the structure of the ribbon 1.

In the process and apparatus described herein with reference to Figs 4 to 9, the heat problem of IR radiation may be reduced by employing dichroic reflectors, which by their nature are double refracting, i.e. have good reflectance for one wavelength, e.g. UV, but poor reflectance for another, e.g. IR, thereby providing focused UV curing radiation while reducing the unwanted IR radiation. Dichroic reflectors are formed by coating on the reflector surface a thin layer of material having an index of refraction selected to either transmit, reflect or absorb the incident radiation, and are available, for example, from the aforesaid Fusion Systems Corporation.

An example of one type of a dichroic reflector which can be used in the process and apparatus described herein with reference to Figs 4 to 9 is shown in fragmentary cross-section in Fig. 6. Reflector 19 has a reflective surface 19a preferably made of an opaque material, e.g. stainless steel, and capable of forming a specular finish upon polishing. A thin layer 20 of an absorbing coating, preferably black, is deposited on the polished reflective surface 19a and also polished to a specular finish. One or more layers 21 of a dielectric material having dichroic properties are then deposited atop the coating 20 on said dichroic reflector 19, and similarly polished to a specular finish. To achieve good UV reflectivity, while keeping IR and visible light radiation to under 10 percent of the total, several coatings or "stacks" of dielectric coating layers 21 are deposited and polished separately before deposition of a subsequent layer. Their reflective effects are cumulative.

As shown in Fig. 6, radiant energy 22 in the short wavelength ultraviolet spectrum is reflected and focused by the dielectric material coating layer 21 whereas the longer wavelengths, visible light 23 and infrared radiation 24, are absorbed by the absorptive coating layer 20. Thermal energy absorbed by layer 20 is conducted to the dichroic reflector 19, which is preferably made of a material that is thermally conductive, and transferred to the exterior surface side 19b of the reflector 19. This conducted heat is easily removed by convective cooling, e.g., an air flow on the exterior surface 19b.

Alternatively, as shown by Fig. 7, a transparent reflector 25 and dichroic dielectric coating layer 21 reflects the shorter UV 22 wavelengths, as in the oven described with reference to Fig. 6, but allows the longer wavelengths of visible light 23 and IR radiation 24 to pass through instead of being absorbed. An advantage of this oven over the previous one is that no cooling device would be necessary.

In accordance with the above discussion, high quality thin and thick optical fiber ribbons can be manufactured by a process using the oven configuration described herein with reference to Figs 4 to 9. Uniform rates of curing and contraction of the curable coating material layer 8 and reduced radiant heating of the ribbon, along both faces of ribbon 1 allows the manufacture of much thinner ribbons than possible in conventional curing ovens. Uniformity in radiation has the added advantage of benefiting fully from the many recent advances in fiber planarity and extrusion techniques, optimizing and minimizing the film thicknesses required for both the thin and thick ribbon types.

A process is illustrated schematically in Fig. 8. Although the schematic is horizontally related, the apparatus may be a vertical assembly. Individual optical fibers 2 are formed by conventional techniques, and preferably, each is coated with protective coating material 5 to protect each fiber 2. A plurality, i.e two or more, of the fibers 2, preferably having identical diameters, are aligned longitudinally into parallel, planar array 6 of closely adjacent fibers, seen along an edge in Fig. 8, by aligning means as they are advanced along their lengths. The fibers can be coated or marked with UV or thermally curable, colored inks for identification purposes.

The array 6 of longitudinally aligned and parallel fibers 2 then passes through an extrusion die 27, which evenly extrudes a curable coating material 8, such as an UV curable acrylate resin, onto array 6 as the fibers are advanced, filling the interstices 9 between the individual fibers 2, and coating the peripheral portions 10 of the end fibers, resulting in a smooth and planar ribbon. As the so-coated fibers 2 are advanced through quartz tube 18 and positioned relative to the radiation means, the extruded coating material layer 8 is then irradiated in oven 15 by radiation of a wavelength which will cause the coating to cure, e.g. ultraviolet radiation. Preferably, other wavelengths, e.g. IR, are not directed on the surface of the ribbon by using dichroic reflectors 16a and 16b of the type described in connection with Figs. 6 and 7. The thickness of the material extruded by die 27 onto planar fiber array 6 varies according to the particular ribbon type desired, i.e. thin or thick. Coating material for the layer 8 preferably has a tensile modulus of at least 30 MPa and relatively low adhesion to the fibers 2, which not only binds the individual optical fibers 2 together, but also restricts the fibers 2 from moving relative to each other during handling while permitting the layer 8 to be relatively easily stripped from the fibers for connection purposes without removing any identification marking on the fibers 2. Such materials are known in the art. However, if desired, the material for the layer 8 can have a bonding to the coating material of the layer 5 which permits interfiber movement, examples of such materials being set forth in U.S. Patent No. 4,900,126. Normally, unless the layer 5 has been coated with a release agent prior to the application of the coating material for the layer 8, the material of the layer 8 will be different from the material of the layer 5.

Thicker layers of extruded coating material 8 are required on ribbons manufactured in conventional equipment which has higher incident IR radiation, lessor quality extrusion dies and/or non-uniform radiation dosages in order to guarantee a minimum spot thickness due to misalignment of the fibers. Because of the manufacturing improvements of the process described herein with reference to Figs 4 to 9, however, much thinner extrusion coatings for both thin and thick ribbons are now possible. Whereas conventional "thin" ribbons have, as a practical matter, a thickness for the layer 8 of approximately 25 microns, thin ribbons manufactured according to the process described herein with reference to Figs 4 to 9 have a layer 8 thickness of approximately 5 - 15 microns. Whereas conventional "thick" ribbons are approximately 100 microns thick, the thickness can now be reduced to 30 - 60 microns. The thickness of the layer 8 is measured along a radius of an optical fiber 2 which is normal to the plane defined by the longitudinal axes of the optical fibers 2.

After extruding the layer 8 of curable coating material onto fiber array 6, the coated array 6 passes through the oven 15, which simultaneously exposes both major surfaces or faces 1a and 1b to substantially equal curing radiation and uniformly cures the layer 8. The duration of exposure and the amount of radiation to which the ribbon is exposed is controlled by the speed of the ribbon 1 through the improved oven and by the radiation level of the lamps 17a and 17b. The simultaneous and uniform irradiation of the coating material of the layer 8 causes uniform curing of the layer 8 as the ribbon is advanced and eliminates warping.

The cured or still curing ribbon 1 then passes onto a second pulley 28 and then to a rotating drum (not shown), onto which the ribbon can be wound.

If the identifying markings or coatings on the fibers 2 can be cured by the radiation from the lamps 17a and 17b, e.g. UV radiation, such markings or coatings will cure, or commence to cure, at the same time as the layer 8.

The encapsulating layer can comprise a plurality of coatings of the same or different materials. Thus, in addition to the layer 8 of coating material, the cured ribbon 1 formed in the above process can be passed through a bath of a molten plastic coating material to form a layer 29 (Fig. 9) or passed through a second extrusion die similar to die 27 for depositing a layer 29 of the plastic coating material on the ribbon 1. Preferably, the plastic coating material for the layer 29 is an acrylate resin or other radiation curable plastic which also cures when subjected to UV radiation, forming a hard protective outer coating, as shown in Fig. 9. As with the application of the layer 8 of extruded coating material, this improved process allows for much thinner films or layers 29 of plastic coating material than the prior art. For example, the total thickness of the layers 8 and 29 of protective plastic coatings on optical fiber ribbons can be reduced from 25 microns as in the prior art, down to 5 - 15 microns with the use of the methods and apparatus described herein with reference to Figs 4 to 9. Plastic coating material 29 forms a protective layer around ribbon 1 and preferably has a high modulus, i.e. a tensile modulus of at least 30 MPa and bonding of layer 29 to the fibers 2 need not be considered and it can be of a material different from the material for the layer 8, thereby providing a robust package for the optical fibers 2 encased therein.

A further advantage of simultaneous and uniform irradiation of ribbon 1 is that unlike conventional ribbon manufacturing the process is not prone to producing warped or curved ribbons at any particular production speed.

As should be clear from the above, positioning the UV sources directly opposite one another about the curable coating cable material provides uniform irradiation of relatively flat ribbons.

It will be apparent to those skilled in the art that various modifications may be made without departing from the principles of the invention as set out in the attached claims.

Use of the method and apparatus described herein with reference to Figs. 4 to 9 simultaneously and uniformly cures curable coating materials along both faces of an optical fiber ribbon, thereby preventing warpage due to uneven curing.

The manufacturing process described herein with reference to Figs. 4 to 9 allows the reduction of the minimum coating thickness necessary for maintaining a fiber ribbon's integrity during processing and handling.

The manufacturing process described herein with reference to Figs. 4 to 9 uniformly cures curable coating materials on both sides of a ribbon in a single pass, simultaneously and at the same rate.

As is clear from the above, a process for manufacturing an optical fiber ribbon array containing two or more fibers is disclosed. The first step in the process is to gather and align the individual fibers longitudinally and parallel to one another and coplanar, forming a planar optical fiber array. A curable coating material is then extruded on the optical fiber array and is thereafter cured by radiation of a wavelength which will cause the coating to cure, e.g. ultraviolet. Simultaneous and uniform radiation treatment by the radiation means 16a, 17a and 16b, 17b with the coated array advanced therebetween such that substantially the same amount of radiation is directed onto each of two directly opposite axially extending outer surface portions of the coating on the respective major faces of the fiber array cures both sides uniformly, simultaneously and at the same rate, i.e. curing radiation impinges uniformly and simultaneously on the surface portions, avoiding uneven contraction and warpage. It is important to note that both surfaces will try to contract proportionally to their degree of cure. The problems arise when one side cures (solidifies and contracts) while the other side is still liquid. The liquid side will be displaced because it is not capable of resisting the other side. Later, when the liquid side is cured (solidified), it will also try to contract, but will be substantially resisted by the previously cured side.

The uniform curing of the coating material may be done by the oven with the pair of opposed elliptical reflectors 16a, 16b sharing a common focal axis, each reflector 16a, 16b having a curing lamp 17a, 17b positioned within its second focal axis, the one not commonly shared.

The pair of opposed reflectors 16a, 16b may have a layer 21 of a dichroic substance that selectively reflects radiation of a desired wavelength for curing purposes, and prevents the transmission of radiation of different and undesirable wavelengths.

## Claims

1. A process of manufacturing an optical fiber ribbon (1) containing a plurality of longitudinally extending optical fibers (2) and having differently facing major surfaces (1a, 1b) without curvature transversely to the ribbon length, comprising the following steps:
(a) aligning said longitudinally extending optical fibers (2) into a substantially planar array of parallel and adjacent optical fibers (2) with the longitudinal axes of the fibers (2) in a rectilinear plane;
(b) extruding a layer (8) of radiation curable coating material on said planar optical fiber array to provide a coated planar array (6) of parallel optical fibers with differently facing first and second coated major surfaces (1a, 1b), said array (6) having a thickness dimension between said major surfaces less than the width dimension of the array in the direction transverse to said thickness dimension; and
(c) passing the coated planar array (6) between a pair of spaced curing radiation sources disposed directly opposite one another at opposite sides of the array (6) passing therebetween, each of said sources including a respective curing radiation emitter (17a, 17b) and a respective radiation focussing reflector (16a, 16b), each emitter being between the reflector associated therewith and the coated planar array, both of said sources (16a, 17a and 16b, 17b) being arranged for directing curing radiation towards each other and uniformly and simultaneously focussing curing radiation onto respective directly opposite axially extending surface portions of said first surface (1a) and said second surface (1b) therebetween such that curing radiation uniformly and simultaneously impinges on said surface portions.

2. A process at set forth in claim 1, wherein said radiation curable coating material is acrylate resin.

3. A process as set forth in claim 1 or 2, wherein said curable coating material layer (8), when cured, has a tensile modulus of at least 30 MPa.

4. A process as set forth in claim 1, 2 or 3, wherein said curable coating material layer (8), has a thickness dimension when cured from about 5 to 15 microns.

5. A process as set forth in claim 1, 2 or 3, where said curable coating material layer (8) has a thickness dimension when cured from about 30 to 60 microns.

6. A process as set forth in any one of claims 1 to 5, wherein at least one of said optical fibers is marked with a curable ink for identification purposes.

7. A process as set forth in claim 6, wherein said ink is cured by ultraviolet radiation.

8. A process as set forth in claim 6, wherein said ink is thermally cured.

9. A process as set forth in any one of claims 1 to 8, wherein a release agent is interposed between each of said optical fibers (2) and said curable coating material layer (8).

10. A process as set forth in any one of claims 1 to 9, wherein steps (b) and (c) are repeated, building up successive layers (8, 29) of cured material on said array (6).

11. A process as set forth in any one of claims 1 to 9, further comprising the steps of:
extruding a further layer (29) of radiation curable plastic coating material on the cured optical fiber ribbon (1) to provide a coated optical fiber ribbon with oppositely facing first and second surfaces; and
passing said cured ribbon (1) with said further radiation curable plastic coating layer (29) thereon between a pair of spaced curing radiation sources, both of the last mentioned sources simultaneously directing curing radiation toward each other and respectively, onto the last-mentioned first and second surfaces.

12. A process as set forth in any one of the preceding claims, wherein said reflectors (16a, 16b) are elliptical.

13. A process as set forth in any one of the preceding claims, wherein said reflectors (16a, 16b) are arranged so as to share a common focal axis.

14. A process as set forth in any one of the preceding claims, wherein said reflectors (16a, 16b) are dichroic.

15. A process as set forth in any one of claims 1 to 14, wherein said curing radiation is ultraviolet radiation.

16. An apparatus for manufacturing an optical fiber ribbon (1) having a plurality of longitudinally extending optical fibers (2) therein, comprising:
means for aligning said longitudinally extending optical fibers into a substantially planar array (6) of parallel and adjacent optical fibers as they are advanced in the direction of their lengths;
means (27) for extruding a radiation curable coating material layer (8) on said planar optical fiber array (6) as said optical fibers are advanced to provide a ribbon (1) having a width transverse to the direction of advance greater than the thickness of the ribbon transverse to the width of the ribbon and providing first and second differently facing major surfaces (1a, 1b) on said layer (8);
oven means for curing said radiation curable coating material layer (8) on said planar array (6) with curing radiation as said array (6) is advanced, said oven means comprising:
a first lamp (17a) adjacent said first surface (1a) of said layer (8) for emitting radiation which will cure said layer (8), and a second lamp (17b) adjacent said second surface (1b) of said layer (8) but at the opposite side of said array (6) from said first lamp (17a) for emitting curing radiation; and
a first reflector (16a) directing said curing radiation from said first lamp (17a) toward said second lamp (17b) and focussing said curing radiation onto said first surface (1a) of said planar array (6) and a second reflector (16b) directing said curing radiation from said second lamp (17b) toward said first lamp (17a) and focussing said curing radiation onto said second surface (1b) of said planar array (6);
whereby said oven means uniformly and simultaneously cures said radiation curable coating material layer (8) on said planar array (6).

17. An apparatus as set forth in claim 16, wherein said first and second reflectors (16a, 16b) are elliptical.

18. An apparatus as set forth in claim 17, wherein said first and second elliptical reflectors (16a, 16b) share a common focal axis along said planar array (6).

19. An apparatus as set forth in claim 16, 17 or 18, wherein said first and second reflectors (16a, 16b) are dichroic.

20. An apparatus as set forth in any one of claims 16 to 19, wherein said first and second lamps (17a, 17b) are ultraviolet radiation emitters.

21. An apparatus as set forth in any one of claims 16 to 20, wherein said oven means further comprises:
tube means (18) which is at least partially transparent to said curing radiation for encircling, and permitting the passage of, said planar array (6) of optical fibers covered by said radiation curable coating material layer (8) while said layer is being cured in said oven means, said tube means (18) being disposed intermediate said first lamp (17a) and said second lamp (17b).

22. An apparatus as set forth in claim 21, wherein said tube means (18) is a quartz tube having a bore larger than the maximum dimension of said planar array (6) of optical fibers with said layer (8) thereon.

23. A process of manufacturing an optical fiber ribbon (1) including providing an elongate assembly comprising a radiation curable coating (8) on a planar array (6) of optical fibers, (2) and curing said coating (8) by directing curing radiation onto each of two directly opposite axially extending outer major surface portions of said coated array, wherein said curing is effected using directly oppositely disposed radiation means each comprising a radiation focussing reflector (16a, 16b) and a curing radiation emitter (17a, 17b) disposed between its respective reflector (16a, 16b) and said assembly (6, 8), said radiation means being arranged such that substantially the same amount of radiation is directly and simultaneously focussed onto each of said outer major surface portions of said array.

24. Apparatus for curing a radiation curable coating (8) of an elongate assembly comprising said coating (8) on a planar array (6) of optical fibers (2), said apparatus comprising directly oppositely disposed first and second radiation means, each of which comprises a radiation focussing reflector (16a, 16b) and a radiation emitter (17a, 17b), and means for positioning the coated array between said radiation means (16a, 16b, 17a, 17b) such that, in use, said radiation means simultaneously focus substantially the same amount of radiation onto each of two directly opposite axially extending outer surface portions of said radiation curable coating (8).

## Patentansprüche

1. Verfahren zur Herstellung eines Lichtleitfaserbandes (1), welches eine Vielzahl von sich längs erstreckenden Lichtleitfasern (2) und unterschiedlich zugewandte Hauptflächen ohne eine Krümmung quer zur Bandlänge enthält, wobei das Verfahren die folgenden Schritte aufweist:
a) fluchtendes Ausrichten der sich längs erstreckenden Lichtleitfasern (2) in einer im wesentlichen planaren Anordnung von parallelen und benachbarten Lichtleitfasern (2), wobei die Längsachsen der Fasern (2) in einer geradlinigen Ebene liegen,
b) Extrudieren einer Schicht (8) aus strahlungshärtbarem Beschichtungsmaterial auf die planare Lichtleitfaseranordnung zur Schaffung einer beschichteten planaren Anordnung (6) von parallelen Lichtleitfasern mit unterschiedlich zugewandten ersten und zweiten beschichteten Hauptflächen (1a, 1b), wobei die Anordnung (6) eine Dickenabmessung zwischen den Hauptflächen hat, die kleiner ist als die Breitenabmessung der Anordnung in der Richtung quer zur Dickenabmessung, und
c) Hindurchführen der beschichteten planaren Anordnung (6) zwischen einem Paar von im Abstand angeordneten Härtungsstrahlungsquellen, die direkt einander gegenüberliegend auf entgegengesetzten Seiten der dazwischen hindurchgehenden Anordnung (6) vorgesehen sind, wobei jede der Quellen einen entsprechenden Härtungsstrahlungsemitter (17a, 17b) und einen entsprechenden Strahlungsfokussierreflektor (16a, 16b) hat, jeder Emitter sich zwischen dem zugeordneten Reflektor und der beschichteten planaren Anordnung befindet, beide Quellen (16a, 17a und 16b, 17b) für ein Richten von Härtungsstrahlung aufeinander zu und in gleichförmiger Weise angeordnet sind und gleichzeitig Härtungsstrahlung auf entsprechende direkt gegenüberliegende, sich axial erstreckende Oberflächenabschnitte der ersten Fläche (1a) und der zweiten Fläche (1b) dazwischen fokussieren, so daß die Härtungsstrahlung gleichförmig und gleichzeitig auf die Oberflächenabschnitte auftrifft.

2. Verfahren nach Anspruch 1, bei welchem das strahlungshärtbare Beschichtungsmaterial ein Acrylharz ist.

3. Verfahren nach Anspruch 1 oder 2, bei welchem die härtbare Beschichtungsmaterialschicht (8), wenn sie gehärtet ist, einen Zugelastizitätsmodul von wenigstens 30 MPa hat.

4. Verfahren nach Anspruch 1, 2 oder 3, bei welchem die härtbare Beschichtungsmaterialschicht (8) eine Dickenabmessung, wenn sie gehärtet ist, von etwa 5 bis 15 µm hat.

5. Verfahren nach Anspruch 1, 2 oder 3, bei welchem die härtbare Beschichtungsmaterialschicht (8) eine Dickenabmessung, wenn sie gehärtet ist, von etwa 30 bis 60 µm hat.

6. Verfahren nach einem der Ansprüche 1 bis 5, bei welchem wenigstens eine der Lichtleitfasern mit einer härtbaren Farbe für Identifizierungszwecke markiert wird.

7. Verfahren nach Anspruch 6, bei welchem die Farbe durch Ultraviolettstrahlung gehärtet wird.

8. Verfahren nach Anspruch 6, bei welchem die Farbe thermisch gehärtet wird.

9. Verfahren nach einem der Ansprüche 1 bis 8, bei welchem zwischen jeder der Lichtleitfasern (2) und der härtbaren Beschichtungsmaterialschicht (8) ein Trennmittel angeordnet ist.

10. Verfahren nach einem der Ansprüche 1 bis 9, bei welchem die Schnitte b) und c) wiederholt werden, wodurch aufeinanderfolgende Schichten (8, 29) von gehärtetem Material auf der Anordung (6) aufgebaut werden.

11. Verfahren nach einem der Ansprüche 1 bis 9, welches weiterhin die Schritte aufweist:
- Extrudieren einer weiteren Schicht (29) von strahlungshärtbarem Kunststoffbeschichtungsmaterial auf dem gehärteten Lichtleitfaserband (1) zur Schaffung eines beschichteten optischen Lichtleitfaserbandes mit entgegengesetzt weisenden ersten und zweiten Flächen und
- Hindurchführen des gehärteten Bandes (1) mit der weiteren strahlungshärtbaren Kunststoffbeschichtungsschicht (29) darauf zwischen einem Paar von im Abstand angeordneten Härtungsstrahlungquellen, wobei beide der zuletzt erwähnten Quellen gleichzeitig Härtungsstrahlung aufeinander zu und jeweils auf die zuletzt genannten ersten und zweiten Flächen richten.

12. Verfahren nach einem der vorhergehenden Ansprüche, bei welchem die Reflektoren (16a, 16b) elliptisch sind.

13. Verfahren nach einem der vorhergehenden Ansprüche, bei welchem die Reflektoren (16a, 16b) so angeordnet sind, daß sie eine gemeinsame Brennlinie haben.

14. Verfahren nach einem der vorhergehenden Ansprüche, bei welchem die Reflektoren (16a, 16b) dichroitisch sind.

15. Verfahren nach einem der Ansprüche 1 bis 14, bei welchem die Härtungsstrahlung eine Ultraviolettstrahlung ist.

16. Vorrichtung zur Herstellung eines Lichtleitfaserbandes (1), das in sich eine Vielzahl von sich längs erstreckenden Lichtleitfasern (2) hat,
- mit einer Einrichtung zur fluchtenden Ausrichtung der sich längs erstreckenden Lichtleitfasern in einer im wesentlichen planaren Anordnung (6) von parallelen und benachbarten Lichtleitfasern, wenn sie in Richtung ihrer Längen vorwärts bewegt werden,
- mit einer Einrichtung (27) zum Extrudieren einer strahlungshärtbaren Beschichtungsmaterialschicht (8) auf die planare Lichtleitfaseranordnung (6), wenn die Lichtleitfasern vorwärts bewegt werden, zur Schaffung eines Bandes (1), das eine Breite quer zur Vorschubrichtung hat, die größer ist als die Dicke des Bandes quer zur Breite des Bandes und erste und zweite unterschiedlich zugewandte Hauptflächen (1a, 1b) auf der Schicht (8) bildet, und
- mit einer Ofeneinrichtung zum Härten der strahlungshärtbaren Beschichtungsmaterialschicht (8) auf der planaren Anordnung (6) mit der Härtungsstrahlung, wenn die Anordnung (6) vorwärts bewegt wird, wobei die Ofeneinrichtung
-- eine erste Lampe (17a) angrenzend an die erste Fläche (la) der Schicht (8) zum Emittieren einer Strahlung, die die Schicht (8) härten wird, und ein zweite Lampe (17b) angrenzend an die zweite Fläche (1b) der Schicht (8), jedoch auf der gegenüberliegenden Seite der Anordnung (6) von der ersten Lampe (17a) zum Emittieren der Härtungsstrahlung, und
-- einen ersten Reflektor (16a) zum Richten der Härtungsstrahlung aus der ersten Lampe (17a) zu der zweiten Lampe (17b) und zum Fokussieren der Härtungsstrahlung auf die erste Fläche (la) der planaren Anordnung (6) und einen zweiten Reflektor (16b) zum Richten der Härtungsstrahlung aus der zweiten Lampe (17b) zur ersten Lampe (17a) und zum Fokussieren der HärtungsStrahlung auf die zweite Fläche (1b) der planaren Anordnung (6) aufweist,
-- wodurch die Ofeneinrichtung die strahlungshärtbare Beschichtungsmaterialschicht (8) auf der planaren Anordnung (6) gleichförmig und gleichzeitig härtet.

17. Vorrichtung nach Anspruch 16, bei welcher der erste und der zweite Reflektor (16a, 16b) elliptisch sind.

18. Vorrichtung nach Anspruch 17, bei welcher der erste und der zweite elliptische Reflektor (16a, 16b) eine gemeinsame Brennlinie längs der planaren Anordnung (6) haben.

19. Vorrichtung nach Anspruch 16, 17 oder 18 bei welcher der erste und der zweite Reflektor (16a, 16b) dichroitisch sind.

20. Vorrichtung nach einem der Ansprüche 16 bis 19, bei welcher die erste und die zweite Lampe (17a, 17b) Ultraviolettstrahlungsemitter sind.

21. Vorrichtung nach einem der Ansprüche 16 bis 20, bei welcher die Ofeneinrichtung weiterhin eine Rohreinrichtung (18) aufweist, die für die Härtungsstrahlung wenigstens teilweise transparent ist, um die planare Anordnung (6) von durch die strahlungshärtbare Beschichtungsmaterialschicht (8) bedeckten Lichtleitfasern zu umschließen und um ihren Durchgang zu ermöglichen, während die Schicht in der Ofeneinrichtung gehärtet wird, wobei die Rohreinrichtung (18) zwischen der ersten Lampe (17a) und der zweiten Lampe (17b) angeordnet ist.

22. Vorrichtung nach Anspruch 21, bei welcher die Rohreinrichtung (18) ein Quarzrohr ist, das eine Bohrung hat, die größer ist als die maximale Abmessung der planaren Anordnung (6) von Lichtleitfasern mit der Schicht (8) auf ihnen.

23. Verfahren zur Herstellung eines Lichtleitfaserbandes (1), welches
- das Bereitstellen einer langgestreckten Anordnung mit einer strahlungshärtbaren Beschichtung (8) auf einer planaren Anordnung (6) von Lichtleitfasern (2) und
- das Härten der Beschichtung (8) durch Richten von Härtungsstrahlung auf jede der zwei direkt gegenüberliegenden sich axial erstreckenden äußeren Hauptflächenabschnitte der beschichteten Anordnung aufweist,
- wobei das Härten dadurch bewirkt wird, daß direkt gegenüberliegend angeordnete Strahlungseinrichtungen verwendet werden, von denen jede einen Strahlungsfokussierreflektor (16a, 16b) und einen zwischen seinem jeweiligen Reflektor (16a, 16b) und der Anordnung (6, 8) angeordneten Härtungsstrahlungsemitter (17a, 17b) aufweist,
- wobei die Strahlungseinrichtungen so angeordnet sind, daß im wesentlichen die gleiche Strahlungsmenge direkt und gleichzeitig auf jeden der äußeren Haupt flächenabschnitte der Anordnung fokussiert wird.

24. Vorrichtung zum Härten einer strahlungshärtbaren Beschichtung (8) einer langgestreckten Anordnung, welche die Beschichtung (8) auf einer planaren Anordnung (6) von Lichtleitfasern (2) aufweist, wobei die Vorrichtung eine direkt gegenüberliegend angeordnete erste und zweite Strahlungseinrichtung hat, von denen jede einen Strahlungsfokussierreflektor (16a, 16b) und einen Strahlungsemitter (17a, 17b) sowie eine Einrichtung zum Positionieren der beschichteten Anordnung zwischen den Strahlungseinrichtungen (16a, 16b, 17a, 17b) derart aufweist, daß im Betrieb die Strahlungseinrichtungen gleichzeitig im wesentlichen die gleiche Strahlungsmenge auf jeden der beiden direkt gegenüberliegenden sich axial erstreckenden äußeren Oberflächenabschnitte der strahlungshärtbaren Beschichtung (8) fokussieren.

## Revendications

1. Procédé de fabrication d'un ruban de fibres optiques (1) contenant une pluralité de fibres optiques (2) s'étendant de manière longitudinale et comportant des faces principales (1a, 1b) orientées différemment sans courbure transversalement à la longueur du ruban, comprenant les étapes suivantes :
(a) aligner lesdites fibres optiques (2) s'étendant de manière longitudinale dans un réseau sensiblement plan de fibres optiques (2) adjacentes et parallèles, les axes longitudinaux des fibres (2) étant dans un plan rectiligne;
(b) extruder sur ledit réseau plan de fibres optiques une couche (8) de matériau de revêtement durcissable sous l'action d'un rayonnement afin de constituer un réseau plan enrobé (6) de fibres optiques parallèles avec une première et une seconde faces principales (1a, 1b) enrobées orientées différemment, ledit réseau (6) présentant une épaisseur entre lesdites faces principales moindre que la largeur du réseau dans la direction transversale à ladite épaisseur; et
(c) faire passer le réseau plan enrobé (6) entre deux sources de rayonnement de durcissement espacées et disposées de façon directement opposée l'une par rapport à l'autre en des côtés opposés du réseau (6) passant entre elles, chacune desdites sources incluant un émetteur de rayonnement de durcissement respectif (17a, 17b) et un réflecteur de concentration des rayons respectif (16a, 16b), chaque émetteur se trouvant entre le réflecteur qui lui est associé et le réseau plan enrobé, les deux dites sources (16a, 17a et 16b, 17b) étant disposées pour diriger le rayonnement de durcissement l'une vers l'autre et pour concentrer uniformément et simultanément le rayonnement de durcissement sur des parties de faces respectives directement opposées s'étendant de manière axiale de ladite première face (1a) et de ladite seconde face (1b) situées entre elles de façon que le rayonnement de durcissement se heurte uniformément et simultanément auxdites parties de faces.

2. Procédé selon la revendication 1, dans lequel ledit matériau de revêtement durcissable sous l'action d'un rayonnement est de la résine d'acrylate.

3. Procédé selon la revendication 1 ou 2, dans lequel ladite couche de matériau de revêtement durcissable (8), une fois durcie, présente un module en traction d'au moins 30 MPa.

4. Procédé selon l'une quelconque des revendications 1, 2 ou 3, dans lequel ladite couche de matériau de revêtement durcissable (8), une fois durcie, présente une épaisseur d'environ 5 à 15 micromètres.

5. Procédé selon l'une quelconque des revendications 1, 2 ou 3, dans lequel ladite couche de matériau de revêtement durcissable (8), une fois durcie, présente une épaisseur d'environ 30 à 60 micromètres.

6. Procédé selon l'une quelconque des revendications 1 à 5, dans lequel l'une au moins desdites fibres optiques est marquée avec une encre durcissable à des fins d'identification.

7. Procédé selon la revendication 6, dans lequel ladite encre est durcie par un rayonnement ultraviolet.

8. Procédé selon la revendication 6, dans lequel ladite encre est durcie de manière thermique.

9. Procédé selon l'une quelconque des revendications 1 à 8, dans lequel un agent de séparation est intercalé entre chacune desdites fibres optiques (2) et ladite couche de matériau de revêtement durcissable (8).

10. Procédé selon l'une quelconque des revendications 1 à 9, dans lequel les étapes (b) et (c) sont répétées, superposant des couches successives (8, 29) de matériau durci sur ledit réseau (6).

11. Procédé selon l'une quelconque des revendications 1 à 9, comprenant de plus les étapes consistant à :
extruder sur le ruban de fibres optiques (1) une couche supplémentaire (29) de matériau de revêtement plastique durcissable sous l'action d'un rayonnement pour constituer un ruban de fibres optiques enrobé avec une première et une seconde faces disposées de manière opposée; et
faire passer ledit ruban durci (1) sur lequel se trouve ladite couche supplémentaire (29) de revêtement plastique durcissable sous l'action d'un rayonnement entre deux sources de rayonnement de durcissement espacées, ces deux sources dirigeant simultanément le rayonnement de durcissement l'une vers l'autre et respectivement, sur les première et seconde faces susmentionnées.

12. Procédé selon l'une quelconque des revendications précédentes, dans lequel lesdits réflecteurs (16a, 16b) sont elliptiques.

13. Procédé selon l'une quelconque des revendications précédentes, dans lequel lesdits réflecteurs (16a, 16b) sont disposés de façon à partager un axe focal commun.

14. Procédé selon l'une quelconque des revendications précédentes, dans lequel lesdits réflecteurs (16a, 16b) sont dichroïques.

15. Procédé selon l'une quelconque des revendications 1 à 14, dans lequel ledit rayonnement de durcissement est un rayonnement ultraviolet.

16. Dispositif permettant de fabriquer un ruban de fibres optiques (1) contenant une pluralité de fibres optiques (2) s'étendant de manière longitudinale, comprenant :
un moyen servant à aligner lesdites fibres optiques s'étendant de manière longitudinale en un réseau sensiblement plan (6) de fibres optiques parallèles et adjacentes tandis qu'elles avancent dans la direction de leur longueur;
un moyen (27) servant à extruder une couche (8) de matériau de revêtement durcissable sous l'action d'un rayonnement sur ledit réseau plan (6) de fibres optiques tandis que lesdites fibres optiques avancent pour constituer un ruban (1) comportant une largeur transversale à la direction du mouvement plus grande que l'épaisseur du ruban transversale à la largeur du ruban, et à constituer une première et une seconde faces principales (1a, 1b) orientées différemment sur ladite couche (8);
des moyens formant four, servant à durcir ladite couche (8) de matériau de revêtement durcissable sous l'action d'un rayonnement sur ledit réseau plan (6) par un rayonnement de durcissement tandis que ledit réseau avance, lesdits moyens formant four comprenant :
une première lampe (17a) adjacente à ladite première face (1a) de ladite couche (8) destinée à émettre un rayonnement permettant de durcir ladite couche (8), et une seconde lampe (17b) adjacente à ladite seconde face (1b) de ladite couche (8) mais de l'autre côté dudit réseau (6) par rapport à ladite première lampe (17a) destinée à émettre un rayonnement de durcissement; et
un premier réflecteur (16a) dirigeant ledit rayonnement de durcissement provenant de ladite première lampe (17a) vers ladite seconde lampe (17b) et concentrant ledit rayonnement de durcissement sur ladite première face (1a) dudit réseau plan (6) et un second réflecteur (16b) dirigeant ledit rayonnement de durcissement provenant de ladite seconde lampe (17b) vers ladite première lampe (17a) et concentrant ledit rayonnement de durcissement sur ladite seconde face (1b) dudit réseau plan (6);
lesdits moyens formant four durcissant de cette manière, uniformément et simultanément, ladite couche (8) de matériau de revêtement durcissable sous l'action d'un rayonnement sur ledit réseau plan (6).

17. Dispositif selon la revendication 16, dans lequel lesdits premier et second réflecteurs (16a, 16b) sont elliptiques.

18. Dispositif selon la revendication 17, dans lequel lesdits premier et second réflecteurs elliptiques (16a, 16b) partagent un axe focal commun le long dudit réseau plan (6).

19. Dispositif selon l'une quelconque des revendications 16, 17 ou 18 dans lequel lesdits premier et second réflecteurs (16a, 16b) sont dichroïques.

20. Dispositif selon l'une quelconque des revendications 16 à 19, dans lequel lesdites première et seconde lampes (17a, 17b) sont des émetteurs de rayonnement ultraviolet.

21. Dispositif selon l'une quelconque des revendications 16 à 20, dans lequel lesdits moyens formant four comprennent en plus :
un moyen formant tube (18) qui est transparent au moins partiellement audit rayonnement de durcissement et servant à encercler ledit réseau plan (6) de fibres optiques couvert par ladite couche (8) de matériau de revêtement durcissable sous l'action d'un rayonnement et permettant le passage dudit réseau dans lesdits moyens formant four, ledit moyen formant tube (18) étant disposé entre ladite première lampe (17a) et ladite seconde lampe (17b).

22. Dispositif selon la revendication 21, dans lequel ledit moyen formant tube (18) est un tube de quartz dont l'alésage est plus grand que la dimension maximum dudit réseau plan (6) de fibres optiques couvert de ladite couche (8).

23. Procédé de fabrication d'un ruban de fibres optiques (1) incluant les étapes consistant à prévoir un ensemble allongé comprenant un revêtement (8) durcissable sous l'action d'un rayonnement sur un réseau plan (6) de fibres optiques (2) et à durcir ledit revêtement (8) en dirigeant un rayonnement de durcissement sur deux parties de faces principales externes dudit réseau enrobé directement opposées s'étendant de manière axiale, dans lequel ledit durcissement est effectué en utilisant des moyens de rayonnement disposés de manière directement opposée, chacun d'eux comprenant un réflecteur (16a, 16b) de concentration de rayonnement et un émetteur (17a, 17b) de rayonnement de durcissement disposé entre son réflecteur (16a, 16b) respectif et ledit ensemble (6, 8), lesdits moyens de rayonnement étant disposés de façon qu'une quantité sensiblement identique de rayonnement soit concentrée directement et simultanément sur chacune desdites parties de faces principales externes dudit réseau.

24. Dispositif servant à durcir un revêtement (8) durcissable sous l'action d'un rayonnement d'un ensemble allongé comprenant ledit revêtement (8) disposé sur un réseau plan (6) de fibres optiques (2), ledit dispositif comprenant un premier et un second moyens de rayonnement placés de manière directement opposée, chacun d'eux comprenant un réflecteur (16a, 16b) de concentration de rayonnement et un émetteur (17a, 17b) de rayonnement, et un moyen servant à positionner le réseau enrobé entre lesdits moyens de rayonnement (16a, 16b, 17a, 17b) de façon que, au cours de l'utilisation, lesdits moyens de rayonnement concentrent simultanément une quantité sensiblement identique de rayonnement sur deux parties de faces externes directement opposées s'étendant de manière axiale dudit revêtement (8) durcissable sous l'action d'un rayonnement.
